# FASCICULE DE BREVET EUROPEEN

(11) **EP 1 283 647 B1**
(45) Date de publication et mention de la délivrance du brevet: **15.06.2011**
(21) Numéro de dépôt: 02291979.9
(22) Date de dépôt: 06.08.2002
(51) Int. Cl.: H04W 16/18

(54) **Procédé et dispositif de détermination d'un plan de fréquences**
Verfahren und Einrichtung zur Frequenzplanbestimmung
Method and device for frequency planning

(30) Priorité: 10.08.2001 FR 0110717
(43) Date de publication de la demande: 12.02.2003
(73) Titulaire: Société Française du Radiotéléphone-SFR, 75008 Paris (FR)
(72) Inventeur: Fattouch, Imad, 75013 Paris (FR)
(74) Mandataire: Debay, Yves

(56) Documents cités:
- EP-A- 0 490 554
- EP-A- 0 847 213
- WO-A-94/03986
- US-A- 5 551 064
- US-A- 6 111 857

## Description

La présente invention concerne les réseaux de radiotéléphonie cellulaire et en particulier la phase de planification des fréquences du réseau.

Un réseau radiocellulaire, par exemple le réseau GSM, est constitué d'une pluralité de stations de base radio terrestres qui sont interconnectées à travers le réseau téléphonique filaire et auxquelles les terminaux mobiles peuvent accéder lorsqu'ils se trouvent dans la cellule radio d'une station.

Chaque station de base doit avoir une portée suffisante pour que la cellule considérée déborde sur les voisines, afin d'éviter tout risque de coupure de communication lorsqu'un terminal mobile change de cellule. Cela nécessite d'augmenter la puissance d'émission des stations au-delà du strict nécessaire.

Un terminal radio mobile reçoit donc, à un niveau utile, les émissions de deux stations lorsqu'il est dans la zone de recouvrement de deux cellules. En pratique, il en reçoit beaucoup plus et, s'il est alors mis sous tension, il se rattache à la station la plus proche, au sens radio, c'est-à-dire celle lui fournissant le niveau de champ radio électrique le plus élevé parmi les six meilleures. Dans la zone de recouvrement, les émissions d'une station non sélectionnée par le terminal constituent un signal parasite d'interférence, du même ordre de grandeur que le signal utile de la cellule de rattachement. En outre, les signaux des stations étant constitués de trames temporelles de même structure, le terminal ne pourrait pas effectuer un filtrage spécifique de spectre pour atténuer le signal parasite.

Pour établir le réseau radio, l'opérateur dispose d'une plage de fréquences qui lui a été allouée et qui constitue une ressource chère. Dans cette plage, il répartit régulièrement des fréquences porteuses, ou canaux de transmission, le pas de fréquence séparant deux porteuses étant suffisant pour que l'interférence intercanaux, compte tenu de la sélectivité des récepteurs, reste inférieure à un seuil de bon fonctionnement déterminé.

Le nombre des valeurs de fréquences porteuses disponibles est cependant bien inférieur au nombre de canaux nécessaires dans la totalité du réseau. Il faut donc utiliser plusieurs fois la même valeur de fréquence dans le réseau, mais il faut vérifier que, dans chaque cellule prévue, le niveau de parasites à la fréquence de sa ou ses porteuses, en provenance des fréquences stations des autres cellules du voisinage, reste en dessous du seuil de bon fonctionnement. En d'autres termes, en tout point d'une cellule, il faut garantir une marge de sécurité entre le niveau de signal utile reçu et le niveau de signal parasite à la fréquence considérée. Comme un réseau comporte quelques milliers de stations qui se perturbent mutuellement, un calcul de ces perturbations nécessite un grand nombre d'heures de calcul par un calculateur classique, de puissance moyenne.

De façon classique, pour ce calcul, on considère une cellule, on estime selon un algorithme, pour les diverses fréquences, ses perturbations mutuelles avec les cellules à portée radio et on retient la fréquence correspondant à la perturbation minimale. L'algorithme passe ensuite à l'examen d'une cellule proche pour répéter ces étapes. On effectue ainsi, de proche en proche, à travers le réseau, un cheminement d'affectation des fréquences.

Les diverses perturbations reçues aux diverses fréquences constituent ainsi une matrice de contraintes pour chaque cellule, qui indique les pondérations de rejet des diverses fréquences.

Il s'agit donc d'un algorithme de choix systématique de gradient local optimal, dans chaque cellule, d'une fonction perturbation, dont la variable « de sortie » est la fréquence, dont la valeur dépend de la variable « d'entrée » qu'est la perturbation.

Exprimé sous forme d'image, on suit par gravité la ligne de plus grande pente dans une vallée.

Un tel procédé est divulgué par le document EP-A2-0847213.

Cet algorithme n'est pas optimal. En effet, même si, lors des choix de fréquences des cellules, on peut tenir compte des perturbations qu'elles vont engendrer, il n'était pas dans les habitudes de remettre en cause les choix initiaux, puisqu'ils conditionnent la suite des choix pour les cellules aval. Il s'agit d'une chaîne logique qui ne peut être remise en cause.

Pour reprendre l'image ci-dessus, on ne peut pas remonter le long des flancs de la vallée pour examiner si une vallée voisine ne conviendrait pas mieux.

En d'autres termes, l'algorithme est unidirectionnel alors que les contraintes de perturbation sont "mutuelles", donc bidirectionnelles. Il est donc mal adapté au problème et en outre son temps de convergence vers un plan de fréquences est élevé puisque ces contraintes mutuelles impliquent un grand nombre de stations mutuellement à portée radio. La charge de calcul varie sensiblement d'une manière exponentielle avec le nombre de stations (problème dit NP-complet.

La présente invention vise à au moins réduire, toutes choses égales, le temps de convergence de l'algorithme.

A cet effet, l'invention concerne un procédé de détermination d'un plan d'un nombre déterminé de fréquences à attribuer à une pluralité de stations de base de gestion de cellules d'un réseau de radiotéléphonie cellulaire, procédé dans lequel, un algorithme exécuté par un système de calcul disposant d'un nombre déterminé de fréquences porteuses de communication radio,
a) choisit une cellule amont déterminée a priori,
b) estime, dans la cellule considérée, des niveaux de perturbations aux diverses fréquences provenant d'autres cellules à portée radio,
c) affecte, à la cellule considérée, une fréquence associée à une perturbation minimale, et,
d) par choix d'une autre cellule du restant de la pluralité à traiter, élabore progressivement une chaîne de cellules aval mutuellement à portée radio en répétant pour chacune les deux étapes précédentes,
le procédé étant caractérisé par le fait que
e) l'utilisateur du système fixe préalablement un seuil de perturbation mutuelle entre deux cellules quelconques,
f) le système compare les niveaux de perturbations estimés au seuil,
g) le système définit un restant de cellules en éliminant du restant de la pluralité de cellules à traiter, les cellules associées à un niveau de perturbation inférieur au seuil,
h) lorsque ledit restant de cellules a été défini en élaborant ainsi un premier tronçon de chaîne à cellules de fréquences affectées, l'algorithme élabore un second tronçon de la chaîne par affectation de fréquences aux cellules non traitées du restant en recherchant pour affectation des fréquences autres à affecter à ces cellules du restant par réitération des étapes e) et h) jusqu'à ce que le restant soit un ensemble vide, et
i) l'algorithme effectue l'élaboration du premier tronçon par une série de cycles tronqués ne prenant en compte, pour chaque cellule à traiter, qu'un nombre limité des cellules perturbatrices restant à traiter et dépassant le seuil, et l'élaboration du second tronçon s'effectue par une série de cycles d'examen exhaustif prenant en compte, pour chaque cellule à traiter, la totalité des cellules perturbatrices restant à traiter.

Ainsi, les cellules sur lesquelles les étapes d'attribution des fréquences sont effectuées sont classées en deux sous-groupes traités successivement.

De préférence, l'utilisateur ou l'algorithme extrait, du premier tronçon, certaines des cellules pour examiner si leur incorporation dans le second tronçon aboutirait à une chaîne de cellules à perturbations réduites.

Ainsi, l'algorithme ne converge pas selon une pente monotone d'optimisation locale, comme évoqué plus haut, mais il prend en compte l'environnement « à distance » pour examiner si une autre ligne de plus grande pente est envisageable, au prix d'une remontée par la réintroduction d'un perturbateur fort. En particulier, on évite ainsi un blocage lorsque la ligne de plus grande pente aboutit à un « mur ».

Un autre but de l'invention est de proposer un dispositif permettant la mise en oeuvre du procédé.

Ce but est atteint par le fait que le dispositif de détermination d'un plan d'un nombre déterminé de fréquences à attribuer à une pluralité de stations de base de gestion de cellules d'un réseau de radiotéléphonie cellulaire, dans lequel, un système de calcul:
- dispose d'une liste mémorisée contenant un nombre déterminé de fréquences porteuses de communication radio,
- comporte des moyens de choisir une cellule amont déterminée a priori dans une zone géographique définie sur une carte mémorisée dans le système de calcul,
- estime par un programme de calcul de perturbations, dans la cellule considérée, des niveaux de perturbations aux diverses fréquences provenant d'autres cellules à portée radio,
- affecte, à la cellule considérée, une fréquence associée à une perturbation minimale, et mémorise cette fréquence dans un fichier des cellules résolues,
- par choix d'une autre cellule du restant de la pluralité à traiter, élabore progressivement une chaîne de cellules aval mutuellement à portée radio en répétant pour chacune les deux étapes précédentes,
le dispositif est caractérisé par le fait qu'il comporte:
- des moyens interactifs permettant à l'utilisateur du système de fixer préalablement un seuil de perturbation mutuelle entre deux cellules quelconques,
- des moyens permettant au système de comparer les niveaux de perturbations estimés au seuil,
- des moyens de définir un restant de cellule en éliminant du restant de la pluralité de cellules à traiter, les cellules associées à un niveau de perturbation inférieur au seuil, et
- lorsque ledit restant de cellules a été défini en élaborant ainsi un premier tronçon de chaîne à cellules de fréquences affectées, des moyens dudit système de calcul élaborent un second tronçon de la chaîne par affectation de fréquences aux cellules non traitées du restant en recherchant pour affectation des fréquences autres à affecter à ces cellules du restant par réitération jusqu'à de que le restant soit un ensemble vide, et
- des moyens permettant au système de calcul d'élaborer ledit premier tronçon par une série de cycles tronqués ne prenant en compte, pour chaque cellule à traiter, qu'un nombre limité des cellules perturbatrices restant à traiter et dépassant le seuil, et d'élaborer ledit second tronçon par une série de cycles d'examen exhaustif prenant en compte, pour chaque cellule à traiter, la totalité des cellules perturbatrices restant à traiter.

Selon une autre particularité du dispositif des moyens permettent à l'utilisateur ou l'algorithme d'extraire, du premier tronçon constituant une liste tabou, certaines des cellules pour examiner si leur incorporation dans le second tronçon aboutirait à une chaîne de cellules à perturbations réduites, améliorant ainsi le plan d'affectation de fréquences.

Selon une autre particularité le dispositif comporte des moyens de mémorisation et de prise en compte des fichiers suivants:
- * .CON qui contient la matrice des contraintes, à prendre en compte, résultant du calcul du module CONTRAINTES.
- * .LID qui contient l'ensemble des cellules impliquées dans la planification de fréquences, ainsi que leurs caractéristiques : capacité, type de partage,....
- *.INT qui contient la liste des cellules dont l'utilisation de certains canaux est interdite par le planificateur et la liste des canaux interdits pour chacune de ces cellules.
- *.VOI qui contient la liste des voisines et doit correspondre strictement au fichier *.LID
- *.MRP qui contient la description de la découpe de bande.

Selon une autre particularité le dispositif comporte des moyens de:
- correction de la zone de service par l'utilisateur par utilisation de moyens graphiques interactifs du système de calcul;
- recalcul par le système de calcul des prédictions de perturbation pour chaque fréquence de chaque cellule;
- préaffectation des canaux par l'utilisateur à l'aide de moyens interactif du système de calcul;
- recalcul du plan des fréquences .

Selon une dernière particularité le dispositif comporte des moyens permettant de
1) Sélectionner le menu permettant de paramétrer puis de calculer le plan de fréquences.
2) Paramétrer la boîte de dialogue de manière à ce que la fréquence la moins brouillée soit affectée en priorité au canal BCCH.
3) Prendre en compte les canaux préaffectés lors de la création de la zone de service.
4) Paramétrer le nombre de cycles et d'itérations nécessaires à l'élimination des brouillages forts.
5) Indiquer les canaux dont dispose le système de calcul pour le calcul du plan de fréquences sur la zone de service couvrant la zone de définition du plan de fréquence.
6) Demander la vérification des voisinages.
7) Paramétrer les seuils de brouillages en cocanal et en canal adjacent.
8) Lancer le calcul du plan de fréquences.
9) Affiner (si nécessaire) les valeurs de seuils de brouillages en cocanal et en canal adjacent.
10) Réduire dans un second temps les autres brouillages (tout en conservant le paramétrage pour l'élimination des brouillages forts).
11) Lancer de nouveau le calcul du plan de fréquences.
12) Vérifier le résultat.
13) Valider le plan de fréquences.

La présente invention sera mieux comprise à l'aide de la description suivante d'un mode préféré de mise en oeuvre du procédé de l'invention, en référence aux dessins annexés, sur lesquels :
- la figure 1 représente schématiquement une partie d'un réseau de radiotéléphonie cellulaire en cours d'élaboration, et
- les figures 2 et 3 représentent respectivement deux matrices de contraintes indiquant les coefficients de perturbation des cellules brouilleuses en colonne sur les cellules serveuses, servant de base de données pour mettre en oeuvre le procédé de l'invention.
- la figure 4 représente les zones de recouvrement de deux cellules implantées sur un même site ou encore dites en co-site ;
- la figure 5 représente la zone de recouvrement de deux cellules implantées sur des sites différents ;
- la figure 6 représente les résultats obtenus par les modifications des listes tabous ;

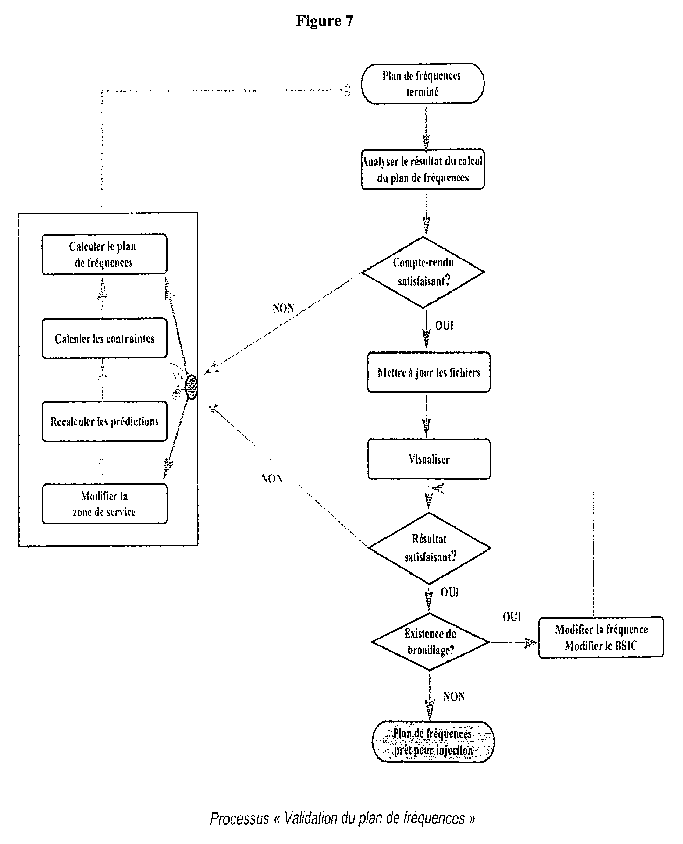

- la figure 7 représente le processus de validation du plan de fréquence obtenu selon l'invention.

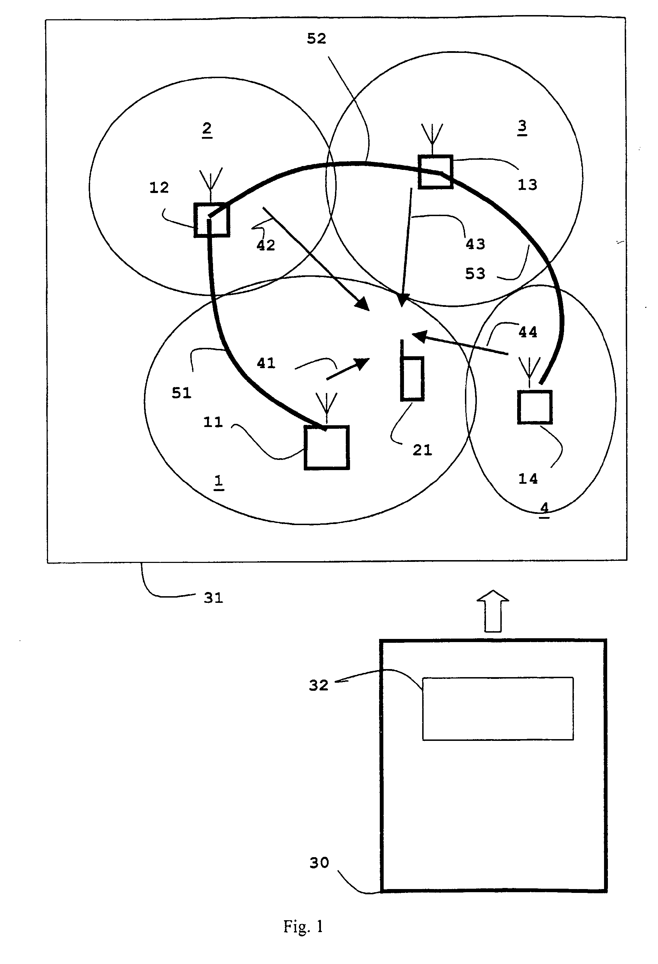

La figure 1 représente une carte 31 d'une zone géographique d'un réseau de radiotéléphonie cellulaire en cours de définition, mémorisée sous forme de données dans un système de calcul et représentable sur un système d'affichage interactif du système de calcul. Sur cette carte (31) ont été reportées les positions prévues de quatre cellules radio, respectivement référencées 1, 2, 3 et 4, entourant des stations de base respectives 11, 12, 13 et 14. Comme représenté, les cellules 1 à 4 sont proches les unes des autres, des zones de bord de la cellule 1 étant même en recouvrement avec ceux des trois autres cellules 2 à 4.

La carte 31 est une représentation de données d'une carte numérique 32 stockée dans une base de données d'un calculateur 30. La carte numérique 32 spécifie les reliefs naturels et artificiels, ainsi que leur nature, telle que forêts, immeubles et autres, ce qui permet de calculer une estimation de l'atténuation radio de liaisons affectées par les reliefs.

L'opérateur du réseau à implanter dispose d'une plage de fréquences et y a défini une pluralité de valeurs de fréquences de porteuses constituant des canaux de transmission, numériques dans cet exemple, tels que ceux du réseau GSM. Les valeurs des fréquences sont également réparties dans la plage considérée selon un pas de fréquence déterminé en fonction de la sélectivité en fréquence des stations de base 11 à 14 et des terminaux mobiles de radiotéléphonie prévus, comme celui référencé 30, dessiné dans la cellule 1. L'opérateur a également défini lors d'étapes précédentes les fichiers suivants:
- * .CON qui contient la matrice des contraintes, à prendre en compte, résultant du calcul du module CONTRAINTES.
- * .LID qui contient l'ensemble des cellules impliquées dans la planification de fréquences, ainsi que leurs caractéristiques : capacité, type de partage,....
- *.INT qui contient la liste des cellules dont l'utilisation de certains canaux est interdite par le planificateur et la liste des canaux interdits pour chacune de ces cellules.
- *.VOI qui contient la liste des voisines et doit correspondre strictement au fichier *.LID
- *.MRP qui contient la description de la découpe de bande.

Comme l'illustrent les flèches 41, 42, 43 et 44, le terminal 21 peut recevoir les émissions des quatre stations 11 à 14, les réceptions respectives représentant un signal utile ou un parasite d'interférence. Un bilan de liaison radio correspondante peut être estimé d'après les positions relatives des stations 11 à 14 par rapport à celle du terminal mobile 21, par un calcul de l'atténuation de transmission. Cette atténuation dépend en particulier de la distance entre l'émetteur considéré et le terminal récepteur 21 et peut facilement être calculée pour une propagation en espace libre dans l'air, à partir d'une valeur d'atténuation linéique qui vaut environ 20 dB/km pour la plage de fréquences considérée et pour les 500 premiers mètres, et 30 dB/km au-delà. Le cas échéant, en cas d'obstacles radio, les renseignements sur les reliefs fournis par la base de données 32 permettent d'estimer le bilan de liaison sur une trajectoire de propagation déterminée.

La carte 31 ainsi renseignée permet donc au calculateur 30 de calculer en tout point un niveau prévisionnel de réception des signaux des stations 11 à 14, si l'on a préalablement fixé leur niveau d'émission.

Ayant choisi a priori les positions des stations 11 à 14 et leurs puissances d'émission, il s'agit alors de déterminer le degré de confinement géographique acceptable pour une même valeur de fréquence porteuse. En effet, il est souhaitable de réutiliser une même valeur de fréquence porteuse un nombre maximal de fois, sans toutefois que les interférences entre cellules ne dégradent la qualité du service radio au-delà d'un seuil déterminé.

Afin de déterminer si ce seuil est atteint dans la cellule 1 par exemple, il est effectué une simulation, en pratique au moyen du calculateur 30, pour estimer le niveau des parasites sur une fréquence porteuse déterminée qui permettent de définir la matrice des contraintes.

Lorsque l'endroit de réception est choisi sensiblement en vue directe des stations émettrices 12 à 14, un calcul d'atténuation de la propagation, pour déterminer le niveau de réception, peut s'effectuer très simplement, en considérant que l'atténuation est celle d'une propagation en espace libre et est représentée par le nombre prédéterminé de décibels par kilomètre (20 ou 30 dB/km). On peut aussi se procurer les valeurs de niveaux de réception par des mesures sur le terrain.

Lors de l'attribution des fréquences pour une même cellule, deux types de zones sont à différencier :
- la zone de service utile,
- la zone de couverture.

La zone de service utile de la cellule , qui est la zone où la cellule est premier, second, troisième serveur, est prise en compte par le planificateur de fréquences lors de l'attribution des fréquences.

Sur cette zone, la protection des interférences s'effectue dans les deux sens entre le mobile et la station de base. Dans le sens :
- montant appelé aussi « uplink » (signal émis du mobile vers la station de base)
- descendant appelé aussi « downlink » (signal émis de la station de base vers le mobile)

Le mobile M1 reçoit un signal utile de puissance C1 de sa station de base (S1). D'autres signaux provenant de stations de base éloignées (S2 et S3) viennent perturber le fonctionnement normal du mobile M1 au sein de la zone de service utile.

Afin d'éviter les interférences (cocanal et canal adjacent), des règles et des normes ont été mises en place. Elles préconisent un seuil C/I minimal théorique de 9 dB) pour la réutilisation d'un même canal.

Un seuil plus « sévère » de 15 à 20 dB peut éventuellement être choisi en vue de s'affranchir des risques inhérents au calcul des prédictions de l'algorithme.

Lors de l'attribution des fréquences quatre règles sont prises en compte par l'algorithme:
1. Règle d'attribution des fréquences sur une même cellule,
2. Règle d'attribution des fréquences entre deux cellules d'un même site,
3. Règle d'attribution des fréquences entre deux cellules voisines (sur des sites différents),
4. Règle d'attribution de deux canaux adjacents.

Cet algorithme respecte les règles d'attribution des fréquences sur un même site (attribution Co-site)

L'écart minimum préconisé entre les fréquences centrales des canaux de deux cellules d'un même site est de 400 kHz. Face aux contraintes techniques des systèmes installés, un écart minimum entre les fréquences d'une même cellule (attribution Co-cell) doit être respecté. L'écart minimum préconisé est de 600 kHz entre les fréquences centrales des canaux d'une même cellule (chaque canal possède une largeur de 200 kHz). Il n'est pas possible d'utiliser des canaux adjacents sur des cellules dépendant du même site.

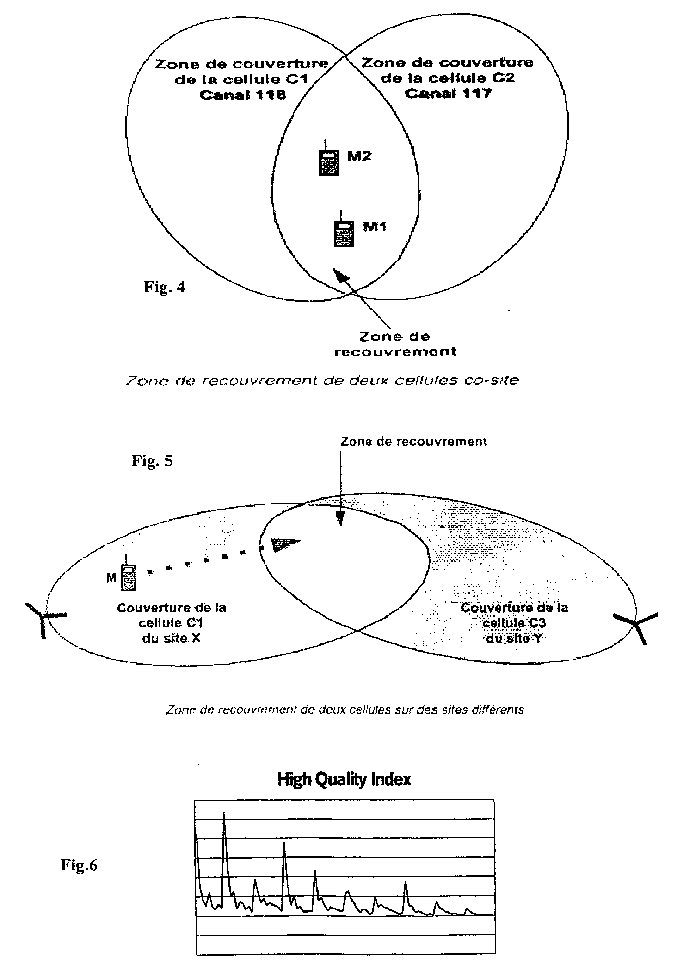

Le schéma de la figure 4 illustre l'exemple de deux mobiles, M1 et M2 se situant dans la zone de recouvrement des deux cellules (C1 et C2), affectées de fréquences adjacentes. Cette situation provoque une augmentation du C/I adjacent supérieur au seuil C/I adjacent maximal autorisé. L'algorithme assure également le respect de la règle d'attribution des fréquences entre 2 cellules voisines (sur des sites différents)

Deux cellules dites voisines possèdent une zone de service avec une frontière commune.

L'écart minimum préconisé entre les fréquences centrales des canaux de deux cellules voisines sur des sites différents est de 400 kHz.

Ainsi comme représenté figure 5 si un mobile M est pris en charge par la cellule n°1 du site X, lorsque ce mobile arrive dans la zone de recouvrement entre la cellule C1 du site X et la cellule C3 du site Y, si aucun écart n'est respecté entre les fréquences respectives de ces cellules, le mobile M est soumis à des interférences importantes. L'écart minimum de 400 kHz, tel que précédemment précisé vise à minimiser ces interférences.

Deux canaux sont dits adjacents lorsqu'ils ont une limite commune.

L'utilisation de ces canaux ne doit pas générer un C/I inférieur à -9 dB. Dans la pratique, l'algorithme permet de fixer un rapport de protection de 0 à 10 dB suivant la densité du réseau à planifier.

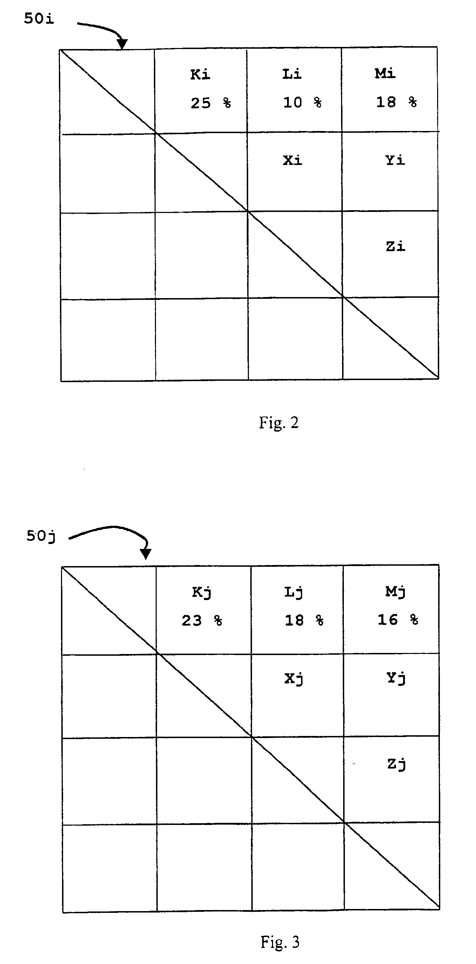

La figure 2 représente une matrice ou table carrée 50i de valeurs d'influences ou perturbations mutuelles entre toutes les cellules 1 à 4 du réseau, appelée matrice de contraintes, ceci pour l'une, fi, des valeurs de fréquences porteuses. La matrice 50i permet ainsi de présenter de façon synthétique, à un logiciel de planification du réseau ou à un opérateur humain, les contraintes à respecter dans le choix d'attribution des fréquences aux stations 11 à 14. Ainsi, les niveaux de perturbation de la cellule 1 par les cellules 2, 3, 4 atteignent les valeurs respectives Ki, Li et Mi. De même, la cellule 2 est perturbée à des niveaux Xi et Yi par les cellules respectives 3 et 4, ces deux dernières se perturbant mutuellement à un niveau Zi. Des matrices du même type, comme la matrice 50j pour la fréquence fj de la figure 3, peuvent être établies pour les diverses valeurs de fréquences porteuses, ce qui permet de disposer d'une vue d'ensemble des contraintes d'interférences radio Kj, Lj, Mj, Xj, Yj, Zj. Chaque matrice 50i ou 50j est en fait un bloc de données utilisable par le calculateur 30, la représentation qui en est ici faite étant à but illustratif.

A partir de la matrice 50i, on peut donc classer les niveaux d'interférence Ki, Li, Mi, et autres des autres cellules non représentées, d'après leur amplitude relative, afin de sélectionner les perturbateurs potentiels les plus importants, en pratique les cellules les plus proches du récepteur 21.

A titre d'exemple, on suppose que les interférences sont les suivantes : Ki = 25 %, Li = 10 % et Mi = 18 %.

Dans cet exemple, la station 12 est le perturbateur le plus fort (Ki = 25 %) de la cellule 1, suivie dans l'ordre par la station 14 (Mi = 18 %) puis la station 13 (Li = 10%).

Un seuil haut, de détermination de perturbateurs dits forts, est par exemple fixé à Sh = 20 %.

Selon le procédé de l'invention, pour la détermination d'un plan d'un nombre déterminé de fréquences à attribuer à la pluralité stations de base 11 à 14 de gestion de cellules d'un réseau de radiotéléphonie cellulaire, procédé dans lequel, disposant d'un nombre déterminé de fréquences porteuses de communication radio,
- l'algorithme ou l'utilisateur choisit une cellule amont déterminée a priori, par exemple la cellule 1,
- puis l'algorithme estime, dans la cellule considérée 1, des niveaux de perturbations aux diverses fréquences provenant d'autres cellules à portée radio,
- et affecte, à la cellule considérée, une fréquence fi, associée à une perturbation minimale, et,
- par choix d'une autre cellule du restant de la pluralité à traiter, le procédé élabore progressivement une chaîne de cellules aval mutuellement à portée radio en répétant pour chacune les deux étapes précédentes.

Il s'agit d'un algorithme, exécuté par le calculateur 30, et qui utilise une liste tabou, signifiant qu'en principe une modification de la liste est interdite. On verra que selon l'invention l'algorithme modifie la liste tabou pour permettre une meilleure résolution du plan de fréquence.

En outre, pour la mise en oeuvre complète du procédé de l'invention,
- l'utilisateur du système fixe préalablement un seuil de perturbation mutuelle entre deux cellules quelconques, ici Sh = 20 %,
- le système compare les niveaux de perturbations estimés au seuil Sh,
- le système de calcul définit un restant de cellules en éliminant du restant de la pluralité de cellules à traiter, les cellules formant une liste tabou et associées à un niveau de perturbation inférieur au seuil Sh, et
- lorsque ledit restant de cellules a été défini en élaborant ainsi un premier tronçon 51 de chaîne à cellules de fréquences affectées, l'algorithme élabore un second tronçon 52, 53 de la chaîne par affectation de fréquences aux cellules non traitées du restant en recherchant pour affectation des fréquences autres à affecter à ces cellules du restant par réitération des étapes e) et h) jusqu'à de que le restant soit un ensemble vide.

On ne prend donc en compte que les plus forts perturbateurs pour choisir une fréquence à attribuer à la cellule en examen, ici la cellule 1. Dans cet exemple, seule la station 12 (Ki = 25 %, Kj = 23 %) est prise en compte pour les deux fréquences ici examinées. Le choix peut donc porter sur la fréquence fj, ou de préférence sur une troisième fréquence, moins perturbée, parmi la pluralité de fréquences possibles.

Si la cellule 1 constitue l'un des premiers maillons du premier tronçon de chaîne, un grand nombre des coefficients des tables 50i et 50j sont en fait inconnus : ils auront, par la suite, la valeur (Ki) indiquée, si la fréquence correspondante (fi) est retenue pour la cellule (2 à 4) actuellement perturbatrice considérée, sinon le coefficient (Ki) sera en fait nul.

Ayant ainsi examiné un nombre tronqué de cellules, les perturbateurs forts aux diverses fréquences, on a donc attribué une fréquence, fj ou autre, à la cellule 1. Si l'on examine ensuite une cellule à portée radio de la cellule 1, comme la cellule 2 déterminant le tronçon 51 (réduit ici à un maillon pour la clarté du dessin), ses matrices comme 50i et 50j sont au moins renseignées en ce qui concerne la cellule 1, c'est-à-dire que Ki est alors nul, et Kj = 23 %.

Le calculateur 30 répète donc les étapes ci-dessus, avec des matrices 50i correspondant à la fréquence fi, 50j correspondant à la fréquence fj, jusqu'à traiter toutes les cellules fortes perturbatrices, ce qui détermine le premier tronçon 51 de la chaîne.

Ensuite, le second tronçon est établi en examinant les stations 13, 14 ou cellules 3, 4 restantes, perturbateurs faibles. Le maillon 52 relie ainsi les stations 12 et 13 et le maillon aval relie les stations 13 et 14.

On notera que le choix d'une nouvelle station à examiner peut correspondre à une station non adjacente à la précédente dans la chaîne. Il s'agit d'une chaîne logique de cellules 1 à 5, chaque maillon constituant un lien causal représenté par la fréquence de la cellule amont, qui influe sur le choix de fréquence pour sa cellule aval.

De préférence comme ici, on effectue l'élaboration du premier tronçon par une série de cycles tronqués ne prenant en compte, pour chaque cellule 1 à 5 à traiter, qu'un nombre limité des cellules perturbatrices restant à traiter et dépassant le seuil Sh, et on effectue l'élaboration du second tronçon 52, 53 par une série de cycles d'examen exhaustif prenant en compte, pour chaque cellule à traiter, sensiblement la totalité des cellules perturbatrices restant à traiter.

On effectue ainsi un premier traitement grossier des contraintes de fréquence, ne nécessitant qu'une charge de calcul limitée, et l'optimisation de la planification des fréquences est effectuée lors de l'examen des perturbateurs faibles.

Pour corriger alors, le cas échéant, un choix non optimal d'attribution de fréquence à certains perturbateurs forts, l'utilisateur ou le programme extrait, du premier tronçon, certaines des cellules en modifiant la liste tabou pour examiner si leur incorporation dans le second tronçon 52, 53 aboutirait à une chaîne de cellules à perturbations réduites. Ainsi comme représenté figure 6 le premier pic correspond au premier traitement réalisé à partir de la liste tabou puis le deuxième pic correspond au deuxième traitement effectué en extrayant de la liste tabou certaines cellules pour examiner si le changement d'attribution de fréquence permet une convergence plus rapide du système permettant d'attribuer à toutes les cellules des fréquences générant le moins de perturbation sur le réseau. Si ce n'est pas le cas le système entreprend d'autres itérations représentées par les autres pics de la figure 6, en éliminant d'autres cellules de la liste tabou, jusqu'à obtenir un plan de fréquence satisfaisant.

Cela permet d'éviter un blocage dans le déroulement des opérations, par exemple lorsque la cellule examinée se trouve entourée d'une périphérie de nombreux perturbateurs forts. On crée alors une « brèche » en supprimant la fréquence perturbatrice de l'une des cellules périphériques ci-dessus pour l'attribuer à la cellule centrale en examen, qui peut donc être traitée et entrer dans la chaîne ou liste. La cellule périphérique perturbatrice est ultérieurement traitée et reçoit une autre fréquence, puisque la cellule centrale, qui a repris la fréquence en litige, est devenue un perturbateur pour la cellule initialement périphérique.

Le calcul d'un plan de fréquences est effectué à l'aide des fonctions du menu « Fréquences » de l'algorithme. Ces fonctions utilisent différents types de fichiers en entrée et en sortie.
Les fichiers pris en compte en entrée pour le calcul d'un plan de fréquences sont les suivants:
- * .CON qui contient la matrice des contraintes, à prendre en compte, résultant du calcul du module CONTRAINTES.
- * .LID qui contient l'ensemble des cellules impliquées dans la planification de fréquences, ainsi que leurs caractéristiques : capacité, type de partage,....
- *.INT qui contient la liste des cellules dont l'utilisation de certains canaux est interdite par le planificateur et la liste des canaux interdits pour chacune de ces cellules.
- *.VOI qui contient la liste des voisines et doit correspondre strictement au fichier *.LID
- *.MRP qui contient la description de la découpe de bande.

L'élaboration d'un plan de fréquences peut être effectuée selon la méthode de l'invention.

Le processus de planification de fréquences de l'invention vise à tenter de trouver une solution minimisant le total des brouillages en deux phases :
- une première assurant la résolution des brouillages forts;
- une deuxième assurant la résolution des autres brouillages.

Ces deux phases peuvent se matérialiser par le graphique de la figure 6.

Dans la première phase tant que le système de calcul parvient à éliminer les brouillages forts, une diminution des valeurs de seuil cocanal fort et seuil adjacent fort doit être envisagée (à ne pas confondre avec les valeurs de seuils de protection cocanal et adjacent fixée à 9 et -4 dB, dans un fichier FREQUENCE.TXT mémorisé).

Le choix de ces valeurs, de seuil cocanal et seuil adjacent (paramétrées à partir de l'interface du système informatique s'effectue en plusieurs étapes :
- La première étape consiste à attribuer des valeurs de pourcentage relativement importantes qui doivent permettre à l'outil d'aboutir à une solution.
   Le système informatique informe l'utilisateur qu'une solution est trouvée par la valeur d'un « indice de qualité » égal à zéro.
- La deuxième étape consiste à diminuer ces valeurs de seuils.

En fonction du nouvel indice de qualité obtenu (zéro ou différent de zéro), d'autres diminutions (si zéro) ou augmentations (si trop grand) des valeurs de seuils doivent être opérées.

Il s'agit de trouver un indice se rapprochant le plus possible de zéro. La connaissance des indices de qualité des plans de fréquences précédents permet de cerner les seuils à utiliser (ceci pour permettre de résoudre les brouillages forts et les voisinages).

Plus cet indice qualité est faible, meilleur est le plan de fréquences (sur une même zone géographique pour un réseau donné).

Dans la deuxième phase le système assure la résolution des autres brouillages. Une fois les brouillages forts éliminés, le système de calcul doit résoudre les autres brouillages (inférieurs aux seuils des brouillages forts).

Le résultat obtenu est un plan de fréquences associé à un indice de qualité.

Pour chaque phase sont définis par l'utilisateur sur une interface interactive du système informatique un nombre de cycles et un nombre d'itérations.

A chaque cycle est appliqué un nombre d'itérations, avec une condition de départ différente (liste différente de fréquences tabou).

Pour chaque itération, l'algorithme du système de calcul consiste à modifier une fréquence sur une cellule et calculer alors un indice qualité correspondant à cette fréquence, ceci pour toutes les fréquences possibles et pour l'ensemble des cellules de la zone à planifier. A la fin de l'itération, on retient la combinaison qui donne le meilleur indice qualité.

En résumé pour calculer le plan de fréquences sur une zone de service à partir des différents fichiers (contraintes, zones neutres, voisinage et constat de brouillage) créés et mémorisés l'utilisateur du système de calcul effectue sur l'interface, les opérations permettant de :
1) Sélectionner le menu permettant de paramétrer puis de calculer le plan de fréquences.
2) Paramétrer la boîte de dialogue de manière à ce que la fréquence la moins brouillée soit affectée en priorité au canal BCCH.
3) Prendre en compte les canaux préaffectés lors de la création de la zone de service.
4) Paramétrer le nombre de cycles et d'itérations nécessaires à l'élimination des brouillages forts.
5) Indiquer les canaux dont dispose le système de calcul pour le calcul du plan de fréquences sur la zone de service couvrant la zone de définition du plan de fréquence.
6) Demander la vérification des voisinages.
7) Paramétrer les seuils de brouillages en cocanal et en canal adjacent.
8) Lancer le calcul du plan de fréquences.
9) Affiner (si nécessaire) les valeurs de seuils de brouillages en cocanal et en canal adjacent.
10) Réduire dans un second temps les autres brouillages (tout en conservant le paramétrage pour l'élimination des brouillages forts).
11) Lancer de nouveau le calcul du plan de fréquences.
12) Vérifier le résultat.
13) Valider le plan de fréquences.

L'enchaînement des actions de validation d'un plan de fréquences suit un processus établi qui permet de relancer certaines étapes afin d'améliorer le résultat final et d'aboutir à un plan satisfaisant.

Au cours de cette étape l'analyse du compte-rendu est menée selon deux points de vue :
- point de vue outil
- point de vue métier

D'un point de vue outil (analyse du fichier .LOG)

II s'agit de vérifier qu'au cours du déroulement de l'algorithme, que le système a bien pris en compte tous les fichiers d'entrée (déclarations des voisines, constats de brouillage, caractéristiques des cellules appartenant à la zone de service...).

En outre, il faut analyser les lignes impactées par les messages d'erreur ou d'avertissement.

D'un point de vue métier (analyse du compte rendu de planification à partir du fichier .BRO)

L'utilisateur s'intéresse, dans un premier temps, aux brouillages non résolus par le système de calcul.

L'objectif est que le nombre et les niveaux de brouillage résiduels soient faibles.

L'analyse porte ensuite sur la présence ou non de viols de voisinage. En priorité, il faut traiter les viols de voisinage sur le canal BCCH en cocanal afin d'éviter des risques de non différenciation des cellules.

Le fichier .BRO résume l'ensemble des brouillages non résolus à l'issue du calcul du plan, ainsi que la répartition des différents canaux sur l'ensemble des cellules impliquées.

### Exemple de fichier .BRO :

Nombre des brouillages mutuels coc>(15%,25%) ou adj>(10%,20%) 0
QUALITE BCCH DU PLAN PROPOSE 2524.50
Nombre des brouil mutuels BCCH coc>(15%,25%) ou adj>(10%,20%) 1
QUALITE DES MICROCELLULES 125.40
Nbre brouil des micros mutuels coc>(15%,25%) ou adj>(10%,20%) 0
QUALITE BCCH DES MICROCELLULES 42.70
Nbre brouil micro mutuels BCCH coc>(15%,25%) ou adj>(10%,20%) 0
répartition des brouillages mutuels cocanaux résiduels
Nombre de brouillages mutuels à plus de 30 % : 0
   " " " " entre 30 et 25 % : 0
   " " " " entre 25 et 20 % : 0
   " " " " entre 20 et 15 % : 0
   " " " " entre 15 et 10 % : 45
   " " " " entre 10 et 5 % : 188
   " " " " entre 5 et 1 % : 3750
répartition des brouillages mutuels bcch cocanaux résiduels
Nombre de brouillages mutuels à plus de 30 % : 0
   " " " " entre 30 et 25 % : 0
   " " " " entre 25 et 20 % : 0
   " " " " entre 20 et 15 % : 0
   " " " " entre 15 et 10% : 11
   " " " " entre 10 et 5% : 54
   " " " " entre 5 et 1 % : 1751
répartition des brouillages mutuels adjacents résiduels
Nombre de brouillages mutuels à plus de 30 % : 0
   " " " " entre 30 et 25 % : 0
   " " " " entre 25 et 20 % : 0
   " " " " entre 20 et 15 % : 0
   " " " " entre 15 et 10 % : 1
   " " " " entre 10 et 5% : 227
   " " " " entre 5 et 1 % : 8945
répartition des brouillages mutuels bcch adjacents résiduels
Nombre de brouillages mutuels à plus de 30 % : 0
   " " " " entre 30 et 25 % : 0
   " " " " entre 25 et 20 % : 0
   " " " " entre 20 et 15 % : 0
   " " " " entre 15 et 10 % : 1
   " " " " entre 10 et 5 % : 73
   " " " " entre 5 et 1 % : 4185

Un histogramme des fréquences (indiqué à la fin de ce fichier) répertorie pour chaque cellule le taux d'affectation de chaque canal.

A l'issue de ces analyses deux cas de figure sont possibles :
- Le compte-rendu n'est pas satisfaisant,
- Le compte-rendu est satisfaisant.

Le compte-rendu n'est pas satisfaisant :

En présence d'un résultat non satisfaisant des actions de correction doivent être entreprises :
0) Eventuellement, corriger la zone de service,
1) Recalculer les prédictions,
2) Modifier et recalculer les contraintes,
3) Préaffecter des canaux,
4) Recalculer le plan des fréquences .

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration mais peuvent être modifiés dans le domaine défini par la portée des revendications jointes.

## Revendications

1. Procédé de détermination d'un plan d'un nombre déterminé de fréquences à attribuer à une pluralité de stations de base (11 - 14) de gestion de cellules (1 - 4) d'un réseau de radiotéléphonie cellulaire, procédé dans lequel, un algorithme exécuté par un système de calcul disposant d'un nombre déterminé de fréquences porteuses fi, fj de communication radio,
a) choisit une cellule amont (1) déterminée a priori,
b) estime, dans la cellule considérée (1), des niveaux de perturbations aux diverses fréquences provenant d'autres cellules (12 - 14) à portée radio,
c) affecte, à la cellule considérée (1), une fréquence fk associée à une perturbation minimale, et,
d) par choix d'une autre cellule (2 - 4) du restant de la pluralité à traiter, élabore progressivement une chaîne de cellules aval mutuellement à portée radio en répétant pour chacune les deux étapes précédentes,
le procédé étant **caractérisé par le fait que**
e) l'utilisateur du système fixe préalablement un seuil Sh de perturbation mutuelle entre deux cellules quelconques,
f) le système compare les niveaux de perturbations estimés au seuil Sh,
g) le système définit un restant de cellule en éliminant du restant de la pluralité de cellules à traiter, les cellules (3 - 4) associées à un niveau de perturbation inférieur au seuil, et
h) lorsque ledit restant de cellules (2) a été défini en élaborant ainsi un premier tronçon de chaîne à cellules de fréquences affectées, l'algorithme élabore un second tronçon de la chaîne par affectation de fréquences aux cellules non traitées (3 - 4) du restant en recherchant pour affectation des fréquences autres à affecter à ces cellules du restant par réitération des étapes e) et h) jusqu'à ce que le restant soit un ensemble vide, et
i) l'algorithme effectue l'élaboration du premier tronçon par une série de cycles tronqués ne prenant en compte, pour chaque cellule à traiter (1), qu'un nombre limité des cellules perturbatrices (2) restant à traiter et dépassant le seuil Sh, et l'élaboration du second tronçon s'effectue par une série de cycles d'examen exhaustif prenant en compte, pour chaque cellule à traiter, la totalité des cellules perturbatrices restant à traiter (3 - 4).

2. Procédé selon la revendication 1, dans lequel l'utilisateur ou l'algorithme extrait, du premier tronçon, certaines des cellules pour examiner si leur incorporation dans le second tronçon aboutirait à une chaîne de cellules (1 - 4) à perturbations réduites, améliorant ainsi le plan d'affectation de fréquences.

3. Procédé selon une des revendications précédentes **caractérisé en ce que** l'algorithme prend en compte les fichiers suivants:
- * .CON qui contient la matrice des contraintes, à prendre en compte, résultant du calcul du module CONTRAINTES.
- * .LID qui contient l'ensemble des cellules impliquées dans la planification de fréquences, ainsi que leurs caractéristiques : capacité, type de partage,....
- *.INT qui contient la liste des cellules dont l'utilisation de certains canaux est interdite par le planificateur et la liste des canaux interdits pour chacune de ces cellules.
- *.VOI qui contient la liste des voisines et doit correspondre strictement au fichier *.LID
- *.MRP qui contient la description de la découpe de bande.

4. Procédé selon une des revendications précédentes **caractérisé en ce qu'**en cas de résultat insatisfaisant il comporte les étapes suivantes:
- correction de la zone de service par l'utilisateur par utilisation de moyens graphiques interactifs du système de calcul;
- recalcul par le système de calcul des prédictions de perturbation pour chaque fréquence de chaque cellule;
- modification par l'utilisateur et recalcul de la matrice des contraintes;
- préaffectation des canaux par l'utilisateur à l'aide de moyens interactif du système de calcul;
- recalcul du plan des fréquences .

5. Procédé selon une des revendications précédentes **caractérisé en ce que** l'utilisateur du système de calcul effectue sur l'interface du système de calcul, les opérations permettant de
- Sélectionner le menu permettant de paramétrer puis de calculer le plan de fréquences;
- Paramétrer la boîte de dialogue de manière à ce que la fréquence la moins brouillée soit affectée en priorité au canal BCCH ;
- Prendre en compte les canaux préaffectés lors de la création de la zone de service ;
- Paramétrer le nombre de cycles et d'itérations nécessaires à l'élimination des brouillages forts ;
- Indiquer les canaux dont dispose le système de calcul pour le calcul du plan de fréquences sur la zone de service couvrant la zone de définition du plan de fréquence ;
- Demander la vérification des voisinages ;
- Paramétrer les seuils de brouillages en cocanal et en canal adjacent ;
- Lancer le calcul du plan de fréquences ;
- Affiner, si nécessaire, les valeurs de seuils de brouillages en cocanal et en canal adjacent ;
- Réduire dans un second temps les autres brouillages, tout en conservant le paramétrage pour l'élimination des brouillages forts ;
- Lancer de nouveau le calcul du plan de fréquences ;
- Vérifier le résultat ;
- Valider le plan de fréquences ;

6. Dispositif de détermination d'un plan d'un nombre déterminé de fréquences à attribuer à une pluralité de stations de base (11 - 14) de gestion de cellules (1 - 4) d'un réseau de radiotéléphonie cellulaire, dans lequel, un système de calcul :
- dispose d'une liste mémorisée contenant un nombre déterminé de fréquences porteuses fi, fj de communication radio,
- comporte des moyens de choisir une cellule amont (1) déterminée a priori dans une zone géographique définie sur une carte mémorisée dans le système de calcul,
- estime par un programme de calcul de perturbations, dans la cellule considérée (1), des niveaux de perturbations aux diverses fréquences provenant d'autres cellules (12 - 14) à portée radio,
- affecte, à la cellule considérée (1), une fréquence fk associée à une perturbation minimale, et mémorise cette fréquence dans un fichier des cellules résolues,
- par choix d'une autre cellule (2 - 4) du restant de la pluralité à traiter, élabore progressivement une chaîne de cellules aval mutuellement à portée radio en répétant pour chacune les deux étapes précédentes,
le dispositif étant **caractérisé par le fait qu'**il comporte:
- des moyens interactifs permettant à l'utilisateur du système de fixer préalablement un seuil Sh de perturbation mutuelle entre deux cellules quelconques,
- des moyens permettant au système de comparer les niveaux de perturbations estimés au seuil Sh,
- des moyens de définir un restant de cellules (2) en éliminant du restant de la pluralité de cellules à traiter, les cellules (3 - 4) associées à un niveau de perturbation inférieur au seuil, et
- lorsque ledit restant de cellules (2) a été défini en élaborant ainsi un premier tronçon de chaîne à cellules de fréquences affectées, des moyens dudit système de calcul élaborent un second tronçon de la chaîne par affectation de fréquences aux cellules non traitées (3 - 4) du restant en recherchant pour affectation des fréquences autres à affecter à ces cellules du restant par réitération jusqu'à de que le restant soit un ensemble vide,
- des moyens permettant au système de calcul d'élaborer ledit premier tronçon par une série de cycles tronqués ne prenant en compte, pour chaque cellule à traiter (1), qu'un nombre limité des cellules perturbatrices (2) restant à traiter et dépassant le seuil Sh, et d'élaborer ledit second tronçon par une série de cycles d'examen exhaustif prenant en compte, pour chaque cellule à traiter, la totalité des cellules perturbatrices restant à traiter (3 - 4).

7. Dispositif selon la revendication 6, dans lequel des moyens permettent à l'utilisateur ou l'algorithme d'extraire, du premier tronçon constituant une liste tabou, certaines des cellules pour examiner si leur incorporation dans le second tronçon aboutirait à une chaîne de cellules (1 - 4) à perturbations réduites, améliorant ainsi le plan d'affectation de fréquences.

8. Dispositif selon une des revendications 6 à 7 **caractérisé en ce qu'**il comporte des moyens de mémorisation et de prise en compte des fichiers suivants:
- * .CON qui contient la matrice des contraintes à prendre en compte, résultant du calcul du module CONTRAINTES.
- * .LID qui contient l'ensemble des cellules impliquées dans la planification de fréquences, ainsi que leurs caractéristiques : capacité, type de partage,....
- *.INT qui contient la liste des cellules dont l'utilisation de certains canaux est interdite par le planificateur et la liste des canaux interdits pour chacune de ces cellules.
- *.VOI qui contient la liste des voisines et doit correspondre strictement au fichier *.LID
- *.MRP qui contient la description de la découpe de bande.

9. Dispositif selon une des revendications 6 à 8 **caractérisé en ce qu'**il comporte des moyens de:
- correction de la zone de service par l'utilisateur par utilisation de moyens graphiques interactifs du système de calcul;
- recalcul par le système de calcul des prédictions de perturbation pour chaque fréquence de chaque cellule;
- modification par l'utilisateur et recalcul de la matrice des contraintes;
- préaffectation des canaux par l'utilisateur à l'aide de moyens interactif du système de calcul;
- recalcul du plan des fréquences.

10. Dispositif selon une des revendications 6 à 9 **caractérisé en ce qu'**il comporte des moyens permettant de :
- Sélectionner le menu permettant de paramétrer puis de calculer le plan de fréquences ;
- Paramétrer la boîte de dialogue de manière à ce que la fréquence la moins brouillée soit affectée en priorité au canal BCCH ;
- Prendre en compte les canaux préaffectés lors de la création de la zone de service ;
- Paramétrer le nombre de cycles et d'itérations nécessaires à l'élimination des brouillages forts ;
- Indiquer les canaux dont dispose le système de calcul pour le calcul du plan de fréquences sur la zone de service couvrant la zone de définition du plan de fréquence ;
- Demander la vérification des voisinages ;
- Paramétrer les seuils de brouillages en cocanal et en canal adjacent ;
- Lancer le calcul du plan de fréquences ;
- Affiner, si nécessaire, les valeurs de seuils de brouillages en cocanal et en canal adjacent ;
- Réduire dans un second temps les autres brouillages, tout en conservant le paramétrage pour l'élimination des brouillages forts ;
- Lancer de nouveau le calcul du plan de fréquences ;
- Vérifier le résultat _{;}
- Valider le plan de fréquences.

## Claims

1. Method for determining a plan for a determined number of frequencies to be assigned to a plurality of base stations (11-14) managing cells (1-4) of a cellular telephone network, a method in which an algorithm performed by a computing system provided with a determined number of radio communication carrier frequencies fi, fj,
a) chooses an *a priori* specified upstream cell (1)
b) in the cell under consideration (1) estimates perturbation levels, at the various frequencies, originating from other cells (12-14) within radio range,
c) assigns to the cell under consideration (1) a frequency fk associated with minimum perturbation, and
d) by choosing another cell (2-4) from the remainder of the plurality to be treated, progressively determines a chain of downstream cells mutually within radio range by repeating the two preceding steps for each thereof,
the method being **characterized by** the fact that:
e) the user of the system previously sets a threshold Sh of mutual perturbation between any two cells,
f) the system compares the estimated perturbation levels with the threshold Sh,
g) the system defines a remainder of cells by eliminating from the remainder of the plurality of cells to be treated those cells (3-4) associated with a perturbation level below the threshold, and
h) when said remainder of cells (2) has been defined by thus determining a first chain section with cells having assigned frequencies, the algorithm determines a second section of the chain by assigning frequencies to the non-treated cells (3-4) of the remainder by seeking other frequencies for assignment to be assigned to these cells of the remainder by reiteration of steps e) and h) until the remainder becomes an empty set, and
i) the algorithm performs the determination of the first section through a series of truncated cycles only taking into account, for each cell to be treated (1), a limited number of perturbing cells (2) remaining to be treated and exceeding the threshold Sh, and the determination of the second section is made through a series of exhaustive examination cycles taking into account, for each cell to be treated, the entirety of the perturbing cells remaining to be treated (3-4).

2. The method according to claim 1, wherein the user or the algorithm extracts some of the cells from the first section to examine whether their incorporation into the second section would lead to a chain of cells (1-4) with reduced perturbation, thereby improving the frequency assignment plan.

3. The method according to any of the preceding claims, **characterized in that** the algorithm takes into account the following files:
- *.CON which contains the matrix of constraints to be taken into account, resulting from computation of the CONSTRAINTS module,
- *.LID which contains all the cells involved in frequency planning, and their characteristics: capacity, share type,
- *.INT which contains the list of cells for which the use of some channels is forbidden by the planner and the list of forbidden channels for each of these cells,
- *.VOI which contains the list of neighbours and must strictly correspond to the *.LID file,
- *.MRP which contains the description of band partitioning.

4. The method according to any of the preceding claims, **characterized in that** in the event of an unsatisfactory result, it comprises the following steps:
- correction of the service area by the user through the use of interactive graphical means of the computing system;
- re-computation by the computing system of perturbation predictions for each frequency of each cell;
- modification by the user and re-computation of the matrix of constraints,
- pre-assignment of channels by the user using interactive means of the computing system;
- re-computation of the frequency plan.

5. The method according to any of the preceding claims, **characterized in that** the user of the computing system, on the interface of the computing system, carries out operations with which it is possible:
- to select the menu allowing parameterization then computing of the frequency plan;
- to parameterize the dialogue box so that the frequency with least interference is assigned in priority to the BCCH channel;
- to take into account the pre-assigned channels when creating the service area;
- to parameterize the number of cycles and iterations required to eliminate strong interference;
- to indicate the channels available to the computing system for computing the frequency plan over the service area covering the definition zone of the frequency plan;
- to request verification of neighbourhoods;
- to parameterize co-channel and adjacent channel interference thresholds;
- to launch computing of the frequency plan;
- to fine-tune co-channel and adjacent channel interference threshold values if necessary;
- at a second stage to reduce other interference, whilst maintaining parameterization to eliminate strong interference;
- to re-launch computing of the frequency plan;
- to verify the result;
- to validate the frequency plan.

6. A device for determining a plan for a determined number of frequencies to be assigned to a plurality of base stations (11-14) managing cells (1-4) of a cellular radio telephone network, wherein a computing system:
- has a memorized list containing a determined number of radio communication carrier frequencies fi, fj,
- comprises means to choose an *a priori* specified upstream cell (1) in a geographical area defined on a map memorized in the computing system,
- using a perturbation computing programme, estimates in the cell under consideration (1) the perturbation levels at the various frequencies, originating from other cells (12-14) within radio range,
- assigns to the cell under consideration (1) a frequency fk associated with minimum perturbation, and memorizes this frequency in a file of resolved cells,
- by choosing another cell (2-4) in the remainder of the plurality to be treated, progressively determines a chain of downstream cells mutually within radio range by repeating the two preceding steps for each thereof,
the device being **characterized by** the fact that it comprises:
- interactive means enabling the user of the system previously to set a mutual perturbation threshold Sh between any two cells,
- means enabling the system to compare the estimated perturbation levels with the threshold Sh,
- means for defining a remainder of cells (2) by eliminating from the remainder of the plurality of cells to be treated, those cells (3-4) associated with a perturbation level below the threshold, and
- when said remainder of cells (2) has been defined by thus defining a first chain section having cells with assigned frequencies, means of the said computing system compute a second chain section by assigning frequencies to the non-treated cells (3-4) of the remainder by seeking other frequencies for assignment to be assigned to these cells of the remainder by reiteration until the remainder becomes an empty set,
- means enabling the computing system to compute said first section through a series of truncated cycles only taking into account, for each cell to be treated (1), only a limited number of perturbing cells (2) remaining to be treated and which exceed the threshold Sh, and to compute said second section through a series of exhaustive examination codes taking into account for each cell to be treated the entirety of the perturbing cells remaining to be treated (3-4).

7. The device according to claim 6, wherein means enable the user or the algorithm to extract some cells, from the first section forming a taboo list, to examine whether the incorporation of these cells into the second section would lead to a chain of cells (1-4) with reduced perturbation, thereby improving the frequency assignment plan,

8. The device according to either of claim 6 to 7, **characterized in that** it comprises means for memorizing and taking into account the following file:
- *.CON which contains the matrix of constraints to be taken into account, resulting from computation of the CONSTRAINTS nodule,
- *.LID which contains all the cells involved in frequency planning, and their characteristics: capacity, share type...
- *.INT which contains the list of cells for which the use of some channels is forbidden by the planner and the list of forbidden channels for each of these cells,
- *.VOI which contains the list of neighbours and must strictly correspond to the*. LID file,
- *.MRP which contains the description of band partitioning.

9. The device according to any of claims 6 to 8, **characterized in that** it comprises means for:
- correction of the service area, by the user, through use of interactive graphical means of the computing system,
- re-computing, by the computing system, of perturbation predictions for each frequency of each cell;
- modification by the user and re-computation of the matrix of constraints;
- pre-assignment of channels by the user using interactive means of the computing system;
- re-computation of the frequency plan.

10. The device according to any of claims 6 to 9, **characterized in that** it comprises means with which it is possible:
- to select the menu allowing parameterization then computation of the frequency plan;
- to parameterize the dialogue box so that the frequency with least interference is assigned in priority to the BCCH channel;
- to take into account the pre-assigned channels when creating the service area;
- to parameterize the number of cycles and iterations required to eliminate strong interference;
- to indicate the channels available to the computing system to compute the frequency plan over the service area covering the definition zone of the frequency plan;
- to request verification of neighbourhoods;
- to parameterize co-channel and adjacent channel interference thresholds;
- to launch computing of the frequency plan;
- to fine-tune co-channel and adjacent channel interference threshold values if necessary;
- at a second stage to reduce other interference, whilst maintaining the parameterization to eliminate strong interference;
- to re-launch computation of the frequency plan;
- to verify the result;
- to validate the frequency plan,

## Patentansprüche

1. Verfahren zur Bestimmung eines Schemas einer bestimmten Anzahl von Frequenzen, die einer Vielzahl von Basisstationen (11-14) zur Verwaltung von Zellen (1-4) eines Mobiltelefonnetzes zuzuweisen sind, ein Verfahren, in dem ein von einem Rechensystem, das über eine bestimmte Anzahl von Radiokommunikations-Trägerfrequenzen fi, fj verfügt, durchgeführter Algorithmus
a) eines priori bestimmte vorgelagerte Zelle (1) auswählt,
b) in der betreffenden Zelle (1) Störpegel auf verschiedenen Frequenzen von anderen Zellen (12-14) in Funkreichweite berechnet,
d) der betreffenden Zelle (1) eine Frequenz fk zuweist, die mit einer minimalen Störung verbunden ist, und
d) durch Auswahl einer anderen Zelle (2-4) aus dem Rest der zu bearbeitenden Vielzahl schrittweise eine Kette nachgelagerter Zellen, die sich gegenseitig in Funkreichweite befinden, ermittelt, wobei für jede die zwei vorhergehenden Schritte wiederholt werden,
wobei das Verfahren **dadurch gekennzeichnet ist, dass**
e) der Benutzer des Systems zuvor einen Grenzwert Sh der gegenseitigen Störung zwischen zwei beliebigen Zellen festlegt,
f) das System die für den Grenzwert Sh berechneten Störpegel vergleicht,
g) das System einen Zellenrest bestimmt, indem es aus dem Rest der Vielzahl zu bearbeitender Zellen die Zellen (3-4) entfernt, die mit einem Störpegel unterhalb des Grenzwerts verbunden sind, und
h) der Algorithmus, wenn der Zellenrest (2) durch Ermittlung eines ersten Kettenabschnitts mit Zellen mit zugewiesenen Frequenzen bestimmt wurde, einen zweiten Abschnitt der Kette durch Zuweisung von Frequenzen an nicht bearbeitete Zellen (3-4) des Rests ermittelt, indem er zwecks Zuweisung andere, an diese Zellen des Rests zuzuweisende Frequenzen durch Wiederholung der Schritte e) und h) sucht, bis der Rest eine leere Gruppe ist, und
i) der Algorithmus den ersten Abschnitts mit einer Reihe trunkierter Zyklen ermittelt, wobei für jede zu bearbeitende Zelle (1) lediglich eine begrenzte Anzahl restlicher zu bearbeitender Störzellen (2), die den Grenzwert Sh überschreiten, berücksichtigt wird, und die Ermittlung des zweiten Abschnitts mit einer Reihe vollständiger Prüfzyklen erfolgt, wobei für jede zu bearbeitende Zelle die Gesamtheit der restlichen zu bearbeitenden Störzellen (3-4) berücksichtigt wird,

2. Verfahren nach Anspruch 1, wobei der Benutzer oder der Algorithmus aus dem ersten Abschnitt einige Zellen entnimmt, um zu prüfen, ob ihre Eingliederung in den zweiten Abschnitt zu einer Zellenkette (1-4) mit reduzierten Störungen führen würde, was das Frequenzzuweisungsschema verbessern würde.

3. Verfahren nach einem der vorangehenden Ansprüche, **dadurch gekennzeichnet, dass** der Algorithmus die folgenden Dateien berücksichtigt:
- *.von, die die Matrix der zu berücksichtigenden Beanspruchungen enthält, woraus der Berechnung des Moduls BEANSPRUCHUNGEN resultiert
- *.LID, die alle Zellen enthält, die an der Frequenzplanung beteiligt sind, sowie ihre Merkmal: Kapazität, Typ der gemeinsamen Nutzung,.,.
- *.INT, die die Liste der Zellen enthält, deren Nutzung bestimmter Kanäle vom Planer verboten wurde und die Liste der Kanäle, die für jede dieser Zellen verboten sind,
- *VOl, die die Liste der Nachbarn enthält und genau der Datei *.LID entsprechen muss,
- *MRP, die die Beschreibung der Bandteilung enthält.

4. Verfahren nach einem der vorangehenden Ansprüche, **dadurch gekennzeichnet, dass** es bei einem unbefriedigenden Ergebnis die folgenden Schritte aufweist:
- Korrektur des Dienstbereichs durch den Benutzer durch Einsatz interaktiver grafischer Mittel des Rechensystems,
- Neuberechnung der Störprognosen für jede Frequenz jeder Zelle durch das Rechensystems,
- Modifizierung durch den Benutzer und Neuberechnung der Beanspruchungsmatrix,
- Vorzuweisung der Kanäle durch den Benutzer mit Hilfe interaktiver Mittel des Rechensystems,
- Neuberechnung des Frequenzschemas.

5. Verfahren nach einem der vorangehenden Ansprüche, **dadurch gekennzeichnet**, das der Benutzer des Rechensystems auf der Schnittstelle des Rechensystems die Maßnahmen durchführt, die es erlauben:
- das Menü auszuwählen, das es erlaubt, das Frequenzschema zu parametrieren und danach zu berechnen;
- die Dialogbox derart zu parametrieren, dass dem Kanal BCCH die am wenigsten gestörte Frequenz vorrangig zugewiesen wird;
- bei der Einrichtung des Dienstbereichs die vorzugewiesenen Kanäle zu berücksichtigen;
- die für die Beseitigung starker Störungen notwendige Anzahl der Zyklen und iterationen zu parametrieren;
- die Kanäle anzugeben, über die das Rechensystem für die Berechnung des Frequenzschemas in dem den Definitionsbereich des Frequenzschemas abdeckenden Dienstbereich verfügt;
- die Überprüfung der Nachbarschaft zu verlangen;
- die Störgrenzwerte im Gleichkanal und im Nachbarkanal zu parametrieren;
- die Berechnung des Frequenzschemas zu starten;
- bei Notwendigkeit die Werte der Störgrenzwerte im Gleichkanal und im Nachbarkanal zu verfeinern;
- in einem zweiten Schritt die anderen Störungen bei Beibehaltung der Parametrierung zur Beseitigung starker Störungen zu reduzieren;
- die Berechnung des Frequenzschemas erneut zu starten;
- das Ergebnis zu überprüfen;
- das Frequenzschema zu bestätigen.

6. Vorrichtung zur Bestimmung eines Schemas einer bestimmten Anzahl von Frequenzen, die einer Vielzahl von Basisstationen (11-14) zur Verwaltung von Zellen (1-4) eines Möbiltelefonnetzes zuzuweisen sind, wobei ein Rechensystem:
- über eine gespeicherte Liste verfügt, die eine bestimmte Anzahl von Radiokommunikations-Trägerfrequenzen fi, fj enthält,
- Mittel zur Auswahl einer a priori bestimmten, vorgelagerten Zelle (1) in einem geografischen Bereich aufweist, der auf einer im Rechensystem gespeicherten Karte festgelegt ist,
- mit einem Programm zur Berechnung von Störungen in der entsprechenden Zelle (1) bei verschiedenen Frequenzen, die von anderen Zellen (12-14) in Funkreichweite herrühren, Störpegel berechnet,
- der entsprechenden Zelle (1) eine mit einer minimalen Störung verbundene Frequenz fk zuweist und diese Frequenz in einer Datei gelöster Zellen speichert,
- durch Auswahl einer anderen Zelle (2-4) aus dem Rest der zu bearbeitenden Vielzahl schrittweise eine Kette nachgelagerter Zellen, die sich gegenseitig in Funkreichweite befinden, ermittelt, wobei für jede die zwei vorhergehenden Schritte wiederholt werden,
wobei die Vorrichtung **dadurch gekennzeichnet ist, dass** sie aufweist
- interaktive Mittel, die es dem Benutzer des Systems ermöglichen, zuvor einen Grenzwert Sh der gegenseitigen Störung zwischen zwei beliebigen Zellen festzulegen,
- Mittel, die es dem System erlauben, die für den Grenzwert Sh berechneten Störpegel zu vergleichen,
- Mittel zur Bestimmung eins Zellenrests (2), indem aus dem Rest der zu bearbeitenden Zellenvielzahl die Zellen (3-4) entfernt werden, die mit einem Störpegel unterhalb des Grenzwerts verbunden sind, und
- die Mittel des Rechensystems, wenn der Zellenrest (2) durch Ermittlung eines ersten Kettenabschnitts mit Zellen mit zugewiesenen Frequenzen bestimmt wurde, einen zweiten Abschnitt der Kette durch Zuweisung von Frequenzen an nicht bearbeitete Zellen (3-4) des Rests ermitteln, indem sie zwecks Zuweisung andere, an diese Zellen des Rests zuzuweisende Frequenzen durch Wiederholung suchen, bis der Rest eine leere Gruppe ist, und
- Mittel, die es dem Rechensystem erlauben, den ersten Abschnitt mit einer Reihe trunkierter Zyklen zu ermitteln, wobei für jede zu bearbeitende Zelle (1) lediglich eine begrenzte Anzahl restlicher zu bearbeitender Störzellen (2), die den Grenzwert Sh überschreiten, berücksichtigt wird, und den zweiten Abschnitt mit einer Reihe vollständiger Prüfzyklen zu vermitteln, wobei für jede zu bearbeitende Zelle die Gesamtheit der restlichen zu bearbeitenden Störzellen (3-4) berücksichtigt wird.

7. Vorrichtung nach Anspruch 6, wobei Mittel dem Benutzer oder dem Algorithmus erlauben, aus dem ersten Abschnitt, der eine Tabuliste darstellt, einige Zellen zu entnehmen, um zu prüfen, ob ihre Eingliederung in den zweiten Abschnitt zu einer Kette von Zellen (1-4) mit reduzierten Störungen führen würde, was das Frequenzzuweisungsschema verbessern würde.

8. Vorrichtung nach einem der Ansprüche 6 bis 7, **dadurch gekennzeichnet, dass** sie Mittel zum Speichern und zur Berücksichtigung der folgenden Dateien umfasst:
- *.CON, die die Matrix der zu berücksichtigenden Beanspruchungen enthält, woraus die Berechnung des Moduls BEANSPRUCHUNGEN resultiert,
- *.LID, die alle Zellen enthält, die an der Frequenzplanung beteiligt sind, sowie ihre Merkmale: Kapazität, Typ der gemeinsamen Nutzung,...
- *.INT, die die Liste der Zellen enthält, deren Nutzung bestimmter Kanäle vom Planer verboten wurde und die Liste der Kanäle, die für jede dieser Zellen verboten sind,
- *VOI, die die Liste der Nachbarn enthält und genau der Datei *.LID entsprechen muss,
- *MRP, die die Beschreibung der Bandteilung enthält,

9. Vorrichtung nach einem der Ansprüche 6 bis 8, **dadurch gekennzeichnet, dass** sie Mittel aufweist zur:
- Korrektur des Dienstbereichs durch den Benutzer durch Einsatz interaktiver grafischer Mittel des Rechensystems;
- Neuberechnung der Störprognosen für jede Frequenz jeder Zelle durch das Rechensystem;
- Modifizierung durch den Benutzer und Neuberechnung der Beanspruchungsmatrix;
- Vorzuweisung der Kanäle durch den Benutzer mit Hilfe interaktiver Mittel des Rechensystems;
- Neuberechnung des Frequenzschemas.

10. Vorrichtung nach einem der Ansprüche 6 bis 9, **dadurch gekennzeichnet, dass** sie Mittel aufweist, die es erlauben:
- das Menü auszuwählen, das es erlaubt, das Frequenzschema zu parametrieren und danach zu berechnen;
- die Dialogbox derart zu parametrieren, dass dem Kanal BCCH die am wenigsten gestört Frequenz vorrangig zugewiesen wird;
- bei der Einrichtung des Dienstbereichs die vorzugewiesenen Kanäle zu berücksichtigen;
- die für die Beseitigung starker Störungen notwendige Anzahl der Zyklen und Iterationen zu parametrieren;
- die Kanäle anzugeben, über die das Rechensystem für die Berechnung des Frequenzschemas in dem den Definitionsbereich des Frequenzschemas abdeckenden Dienstbereich verfügt;
- die Überprüfung der Nachbarschaft zu verlangen;
- die Störgrenzwerte im Gleichkanal und im Nachbarkanal zu parametrieren;
- die Berechnung des Frequenzschemas zu starten;
- bei Notwendigkeit die Werte der Störgrenzwerte im Gleichkanal und im Nachbarkanal zu verfeinern;
- in einem zweiten Schritt die anderen Störungen bei Beibehaltung der Parametrierung zur Beseitigung starker Störungen zu reduzieren;
- die Berechnung des Frequenzschemas erneut zu starten;
- das Ergebnis zu überprüfen;
- das Frequenzschema zu bestätigen.
